# EUROPÄISCHE PATENTSCHRIFT

(11) **EP 2 803 755 B1**
(45) Veröffentlichungstag und Bekanntmachung des Hinweises auf die Patenterteilung: **07.10.2015**
(21) Anmeldenummer: 13167998.7
(22) Anmeldetag: 16.05.2013
(51) Int. Cl.: C25B 15/08, C25B 1/12, B60S 5/02

(54) **Verfahren zum Betreiben einer Hochdruckelektrolyseanlage, Hochdruckelektrolyseanlage sowie Wasserstoff-Tankstelle mit einer Hochdruckelektrolyseanlage**
Method for operating a high pressure electrolysis installation, high pressure electrolysis installation and hydrogen filling station with a high pressure electrolysis installation
Procédé de fonctionnement d'une installation d'électrolyse sous haute pression, installation d'électrolyse sous haute pression et distributeur d'hydrogène doté d'une installation d'électrolyse sous haute pression

(43) Veröffentlichungstag der Anmeldung: 19.11.2014
(73) Patentinhaber: Siemens Aktiengesellschaft, 80333 München (DE)
(72) Erfinder: Herold, Jochen, 96260 Weismain (DE); Kautz, Martin, 91056 Erlangen (DE)

(56) Entgegenhaltungen:
- DE-A1- 10 307 112
- DE-A1-102008 052 827
- JP-A- 2007 309 375

## Beschreibung

Die Erfindung betrifft ein Verfahren zum Betreiben einer Hochdruckelektrolyseanlage. Die Erfindung betrifft weiterhin eine Hochdruckelektrolyseanlage sowie eine Wasserstoff-Tankstelle mit einer solchen Hochdruckelektrolyseanlage.

Wasserstoff wird heutzutage unter anderem mittels PEM-Elektrolyse erzeugt. Bestandteil eines PEM-Elektrolyseurs ist eine protonendurchlässige Polymermembran (Proton-Exchange-Membrane, PEM), die auf beiden Seiten von porösen Platinelektroden (Anode und Kathode) kontaktiert wird. Im Betrieb eines Hochdruckelektrolyseurs basierend auf der PEM-Technologie, d.h. eines Elektrolyseurs mit einem Betriebsdruck von 30 bar bis ca. 100 bar, werden zwei getrennte Wasserkreisläufe, nämlich ein anodenseitiger sowie ein kathodenseitiger Wasserkreislauf, realisiert. An die Elektroden wird eine äußere Spannung angelegt und auf der Anodenseite des Elektrolyseurs wird Wasser zugeführt. Durch die katalytische Wirkung des Platins wird das Wasser an der Anodenseite zersetzt. Es entstehen dabei Sauerstoff, freie Elektronen und positiv geladene Wasserstoffionen H⁺. Die Wasserstoffionen H⁺ diffundieren durch die protonenleitende Membran (PEM) auf die Kathodenseite, wo sie mit den Elektronen aus dem äußeren Stromkreis zu Wasserstoffmolekülen H₂ kombinieren.

Die großtechnische Wasserstofferzeugung mittels Elektrolyse kann insbesondere im Rahmen der Energiewende einen signifikanten Beitrag zur Vergleichsmäßigung schwankenden Stromangebots aus erneuerbaren Energien liefern. Die Wasserelektrolyse wird dabei bevorzugt bei temporären Energiespitzen durch regenerativen Einspeiser (Wind, Photovoltaik) genutzt.

Der Elektrolyseprozess wird z.B. zur Erzeugung von Wasserstoff als Treibstoff für Fahrzeuge angewendet. Heutige Tankstellen für Wasserstoff (beispielsweise im Rahmen von Demonstrationsprojekten) bestehen grundsätzlich aus den drei Sektionen "Wasserstofferzeugung", "Wasserstoffspeicherung" und "Kompression und Betankungssystem". Die Sektion "Wasserstofferzeugung" wird entweder zentral erbracht (meist mittels "Erdgas- bzw. Dampfreformierung") und der gewonnene Wasserstoff wird dann mittels speziellen Tankwägen bei den Tankstellen angeliefert und dort in Tanks zwischengelagert, oder er wird vor Ort erzeugt, dann aber auch bis zur Verwendung in Tanks zwischengelagert.

Im Betrieb einer Hochdruckelektrolyseanlage wird Sauerstoff, bei z.B. ca. 50 bar erzeugt. Bisher wird der unter Druck stehende Sauerstoff auf Umgebungsdruck entspannt und an die Umgebung abgegeben. Eine Nutzung des Sauerstoffs bzw. der Druckenergie des Sauerstoffs ist derzeit nicht vorgesehen.

Der Erfindung liegt die Aufgabe zugrunde, eine Verbesserung der Energieeffizienz einer Hochdruckelektrolyseanlage, die insbesondere zum Herstellen von Wasserstoff für eine Wasserstoff-Tankstelle verwendet wird, zu ermöglichen. Der Erfindung liegt zudem die Aufgabe zugrunde, die Energiebilanz einer Wasserstoff-Tankstelle, bei der Wasserstoff in einer Hochdruckelektrolyseanlage erzeugt wird, zu verbessern.

Die erstgenannte Aufgabe wird erfindungsgemäß gelöst durch ein Verfahren zum Betreiben einer Hochdruckelektrolyseanlage, wobei
- in einem Hochdruckelektrolyseur, insbesondere einem PEM-Hochdruckelektrolyseur, ein Wasserstoff-Strom und ein Sauerstoff-Strom hergestellt werden, die unter hohem Druck aus dem Hochdruckelektrolyseur hinausgeleitet werden,
- der Sauerstoff-Strom zum Entspannen in ein Wirbelrohr eingeleitet wird, in welchem die Druckenergie des Sauerstoffs in Kälte umgewandelt wird, wobei ein Kaltsauerstoff-Strom erzeugt wird,
- der Kaltsauerstoff-Strom zum Kühlen des Wasserstoff-Stroms verwendet wird.

Die erstgenannte Aufgabe wird weiterhin erfindungsgemäß gelöst durch eine Hochdruckelektrolyseanlage umfassend einen Hochdruckelektrolyseur, insbesondere einen PEM-Hochdruckelektrolyseur, zur Herstellung eines Wasserstoff-Stroms und eines Sauerstoff-Stroms, wobei aus dem Hochdruckelektrolyseur eine Wasserstoff-Leitung bzw. eine Sauerstoff-Leitung hinausführen, umfassend weiterhin ein in der Sauerstoff-Leitung integriertes Wirbelrohr zum Entspannen des Sauerstoff-Stroms, wobei aus dem Wirbelrohr eine Kaltsauerstoff-Leitung für einen Kaltsauerstoff-Strom vorgesehen ist, die mit der Wasserstoff-Leitung strömungstechnisch verbunden ist.

Die zweitgenannte Aufgabe wird zudem erfindungsgemäß gelöst durch eine Wasserstoff-Tankstelle mit einer solchen Hochdruckelektrolyseanlage.

Die in Bezug auf das Verfahren nachstehend angeführten Vorteile und bevorzugten Ausgestaltungen lassen sich sinngemäß auf die Hochdruckelektrolyseanlage und die Wasserstoff-Tankstelle übertragen.

Mit "unter hohem Druck" wird hierbei ein Druckniveau des Wasserstoff-Stroms und des Sauerstoff-Stroms bezeichnet, das mehrere bar über dem Atmosphärendruck liegt. Ein derartiges Druckniveau zeichnet eine Hochdruckelektrolyseanlage aus. Der Druck beider Ströme liegt bevorzugt zwischen 30 bar und 100 bar.

Die Erfindung basiert auf der Idee die Druckenergie des Sauerstoffs, der beim Betrieb des Hochdruckelektrolyseurs freigesetzt wird, zu nutzen, um den Wasserstoff, der ebenfalls im Hochdruckelektrolyseur gleichzeitig mit dem Sauerstoff entsteht, zu kühlen. Um dies zu erreichen, ist eine integrierte Verschaltung der Stoff- und Energieströme der Hochdruckelektrolyseanlage vorgesehen. Das ansonsten ungenutzte Energiepotential des Sauerstoffs wird somit in den Wasserstoffprozess rückgeführt.

Die Umwandlung der Druckenergie des Sauerstoffs in Kälte erfolgt hierbei in einem Wirbelrohr, das in der Sauerstoff-Leitung des Elektrolyseurs eingebaut ist. Wirbelrohre sind seit Jahrzehnten bekannt, beispielsweise ist ein Wirbelrohr in der Patentanmeldung US 1 952 281 A beschrieben. Wirbelrohre finden heutzutage beispielsweise in Raffinerien industrielle Anwendung. Da ein Wirbelrohr eine statische Vorrichtung ist, ist der Einsatz eines Wirbelrohrs in einer Hochdruckelektrolyseanlage mit einem relativ geringen finanziellen Aufwand verbunden. Es fallen dabei nur minimale Wartungskosten an, da ein Wirbelrohr keine beweglichen Teile aufweist.

Der unter Druck stehende Sauerstoff aus der Sauerstoff-Leitung wird tangential in das Wirbelrohr eingeblasen und in eine schnelle Rotation versetzt. Der Sauerstoff-Strom teilt sich dabei aufgrund der hohen Zentripetalkräfte in einen warmen und einen kalten Strom auf, die weiterhin als Kaltsauerstoff-Strom und Sauerstoff-Warmstrom bezeichnet werden. Der Kaltsauerstoff-Strom wird aus dem Wirbelrohr hinausgeleitet und zum Wasserstoff-Strom geführt. Wenn eine Kühlung des Wasserstoff-Stroms erforderlich ist, beispielsweise bei einem Verdichtungsvorgang des Wasserstoffs, wird dann mit dem kalten Sauerstoff aus dem Wirbelrohr die Temperatur des Wasserstoffs herabgesetzt.

Ein typischer Anwendungsfall, bei dem eine Kühlung des Wasserstoff-Stroms erforderlich ist, ist wenn der Wasserstoff aus der Hochdruckelektrolyse als Kraftstoff für eine Wasserstoff-Tankstelle verwendet wird, da beim Komprimieren zum Betankungsvorgang die Wasserstofftemperatur auf mehrere 100°C ansteigt. Bei einer Wasserstoff-Tankstelle mit einer Hochdruckelektrolyseanlage sind dabei die räumliche Nähe sowie die Infrastruktur vorhanden, um mit geringem technischem Aufwand den Kaltsauerstoff-Strom aus dem Wirbelrohr zum Kühlen des Wasserstoffs während des Betankungsvorgangs einzusetzen.

Je nach Anforderungen für die Menge an Kaltsauerstoff können auch mehrere Wirbelrohre zum Einsatz kommen.

Der weitere im Wirbelrohr entstehende Strom, d.h. der Warmsauerstoff-Strom, kann zu Heizzwecken innerhalb der Hochdruckelektrolyseanlage oder außerhalb dieser Anlage verwendet werden. Alternativ wird der Warmsauerstoff-Strom an die Umgebung abgegeben.

Bevorzugt wird der Sauerstoff-Strom vor dem Entspannen in einem Druckspeicher, der in der Sauerstoff-Leitung vor dem Wirbelrohr angeordnet ist, zwischengespeichert. Durch die Zwischenspeicherung und anschließenden Nutzung des unter Druck stehenden Sauerstoffs im Wirbelrohr kann das Kältepotential des Drucksauerstoffs bedarfsgerecht genutzt werden. Dies bedeutet, dass der Kaltsauerstoff-Strom insbesondere nur dann erzeugt wird, wenn eine Kühlung des Wasserstoffs unmittelbar erforderlich ist. Wenn kein Kühlbedarf besteht, wird der Sauerstoff zunächst zwischengelagert.

Gemäß einer weiteren bevorzugten Ausführungsvariante wird dem Druckspeicher aus einer externen Quelle ein zusätzliches Gas unter hohem Druck, insbesondere Sauerstoff, zugeführt. Das zusätzliche Gas ist insbesondere auf einen Druck verdichtet, der dem Druck des Sauerstoff-Stroms in der Sauerstoff-Leitung entspricht (beispielsweise ca. 50 bar). Wenn das Kältepotential des im Elektrolyseur generierten Sauerstoffs nicht ausreicht, um den gesamten, in der Hochdruckelektrolyseanlage parallel hergestellten Wasserstoff zu kühlen, sind zusätzliche Kühlquellen zum Kühlen des Wasserstoffs erforderlich. Auf weitere, die Kühlung mit Kaltsauerstoff ergänzende Kühlmittel und Kühlverfahren kann hierbei verzichtet werden, indem verhältnismäßig viel komprimierter Sauerstoff (oder komprimierter Sauerstoff gemischt mit einem andere Gas) zur Verfügung gestellt wird, der zu Kühlzwecken eingesetzt wird. Da die dafür erforderliche Menge an Sauerstoff nicht allein in der Hochdruckelektrolyseanlage produziert werden kann, werden weitere Sauerstoffquellen erschlossen, so dass ausreichend Sauerstoff unter hohem Druck zur Verfügung gestellt wird. Es wird somit eine Kühlung "on demand" ermöglicht, die vollständig auf der Nutzung der Druckenergie von komprimiertem Sauerstoff basiert.

Zweckdienlicherweise wird der Sauerstoff im Wirbelrohr unterhalb 0°C, insbesondere unterhalb -20°C, insbesondere auf ca. -40°C abgekühlt. Die Temperatur hängt hierbei von der Auslegung des Wirbelrohrs ab. Je niedriger die Temperatur des Kaltsauerstoff-Stroms ist, desto effektiver ist die Kühlung des Wasserstoffs. Daher werden die durch das Wirbelrohr erreichbaren Minimaltemperaturen des Sauerstoff-Kältestroms erzielt.

Vorteilhafterweise wird der Wasserstoff-Strom beim Komprimieren auf einen Druck von mindestens ca. 700 bar, insbesondere auf einen Druck von ca. 800 bar, mittels des Kaltsauerstoff-Stroms gekühlt. Hierfür ist ein in der Wasserstoffleitung eingebauter Kompressor vorgesehen. Da beim Verdichten des Wasserstoffs auf einen derartig hohen Druck sich seine Temperatur stark erhöht, wird der Kompressor in der Wasserstoffleitung mittels des Kaltsauerstoff-Stroms gekühlt. Alternativ kann der Wasserstoff vor der Verdichtung gekühlt werden, so dass er mit einer sehr niedrigen Temperatur dem Verdichter zugeführt wird.

Bevorzugt ist der Wasserstoff zum Betanken von Kraftfahrzeugen vorgesehen und die Kühlung mit dem Kaltsauerstoff-Strom erfolgt vor einem Betankungsvorgang. Hierbei ist vorzugsweise dem Kompressor in der Wasserstoff-Leitung eine Tanksäule nachgeschaltet. Der Kompressor selbst kann Bestandteil einer Tankstelle sein, welche eine oder mehrere Tanksäulen umfasst, die dem Kompressor nachgeordnet sind.

Alternativ kann dem Kompressor eine Pipeline nachgeschaltet sein, die zunächst kein Endverbraucher des Wasserstoffs ist.

Die Wasserstoff-Tankstelle weist vorzugsweise ein Kältenetz zur Versorgung von Einrichtungen der Tankstelle mit Kälte auf, wobei die Kaltsauerstoff-Leitung Teil dieses Kältenetzes ist. Dadurch wird eine Kälte-Infrastruktur geschaffen, welche insbesondere den gesamten Kältebedarf der Tankstelle, z.B. zum Kühlen von Räumen oder zum Kühlen von Lebensmitteln abdeckt.

Ausführungsbeispiele der Erfindung werden anhand einer Zeichnung näher erläutert. Dabei zeigen:
- FIG 1: eine strömungstechnische Verbindung zwischen einer Hochdruckelektrolyseanlage und einer Wasserstroff-Tankstelle, und
- FIG 2: ein Kältenetz einer Wasserstoff-Tankstelle.

Gleiche Bezugszeichen haben in den verschiedenen Figuren die gleiche Bedeutung.

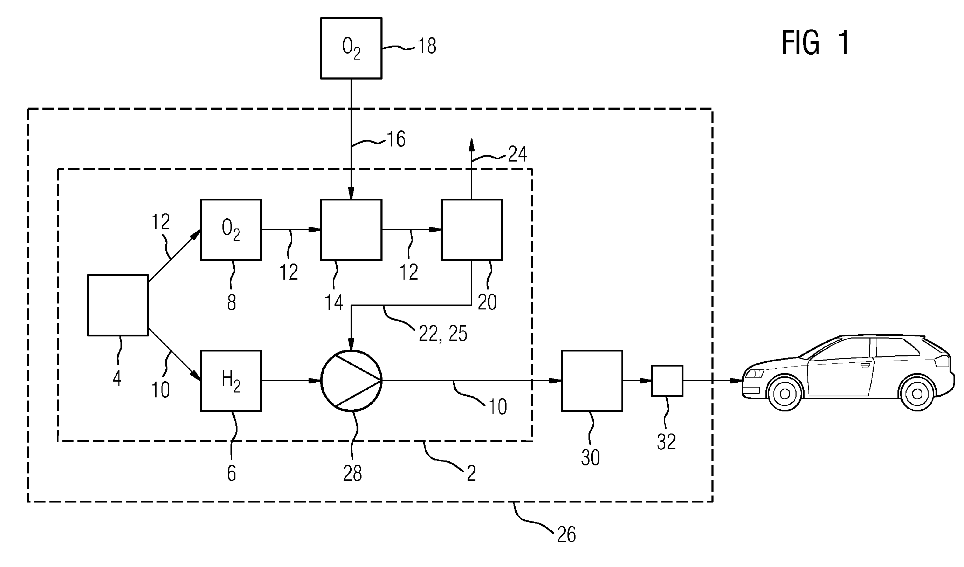

In FIG 1 ist eine Hochdruckelektrolyseanlage 2 gezeigt, die einen sogenannten Hochdruckelektrolyseur 4 zur Herstellung eines Wasserstoff-Stroms 6 und eines Sauerstoff-Stroms 8 umfasst. Im gezeigten Ausführungsbeispiel ist der Hochdruckelektrolyseur 4 ein PEM-Hochdruckelektrolyseur 4. Für den Wasserstoff-Strom 6 und den Sauerstoff-Strom 8 sind entsprechend eine Wasserstoff-Leitung 10 und eine Sauerstoff-Leitung 12 vorgesehen, durch welche das jeweilige Gas unter hohem Druck, insbesondere bei einem Druck über 30 bar, z.B. bei 50 bar, aus dem PEM-Hochdruckelektrolyseur 4 hinausgeleitet wird. In der Wasserstoff-Leitung 10 und der Sauerstoff-Leitung 12 herrscht hierbei eine Temperatur von ca. 60°C.

Gemäß FIG 1 ist in der Sauerstoff-Leitung 12 ein Sauerstoff-Druckspeicher 14 integriert, in dem über einen Zeitraum Sauerstoff aus dem PEM-Hochdruckelektrolyseur 4 gespeichert wird. Im gezeigten Ausführungsbeispiel ist zudem eine Leitung 16 vorgesehen, über welche Sauerstoff aus einer externen Quelle 18, wie z.B. Sauerstoff aus einer anderen, hier nicht näher gezeigten Elektrolyseanlage, in den Sauerstoff-Druckspeicher 14 eingespeist wird. Der Sauerstoff der externen Quelle 18 weist hierbei ebenfalls hohen Druck auf, insbesondere einen Druck von ca. 50 bar, den gleichen Druck wie der Sauerstoff in der Sauerstoff-Leitung 12. Durch den Druckspeicher 14 wird eine bedarfsgerechte Bereitstellung von Sauerstoff gewährleistet, insbesondere wenn große Mengen an Sauerstoff gebraucht werden. Jedoch kann sowohl auf den Sauerstoff der externen Quelle 18 als auch auf den Druckspeicher 14 verzichtet werden, insbesondere wenn kontinuierlich Sauerstoff gebraucht wird.

Dem Druckspeicher 14 ist ein Wirbelrohr 20 nachgeschaltet. Das Wirbelrohr 20 stellt eine Entspannungsvorrichtung dar, bei der der Sauerstoff-Strom 8 in einen Kaltsauerstoff-Strom 22 und einen Warmsauerstoff-Strom 24 aufgeteilt wird. Der Warmsauerstoff-Strom 24 wird hierbei an die Umgebung abgegeben, alternativ kann er jedoch beispielsweise für Heizungszwecke verwendet werden. Der Kaltsauerstoff-Strom 22 wird wiederum zum Kühlen des Wasserstoff-Stroms 6 des PEM-Hochdruckelektrolyseurs 4 verwendet, daher wird der Kaltsauerstoff-Strom 22 über eine Kaltsauerstoff-Leitung 25 zum Wasserstoff-Strom 6 transportiert. Nach dem Wirbelrohr 20 ist der Kaltsauerstoff-Strom 22 auf eine Temperatur unterhalb 0°C, insbesondere auf ca. -40°C abgekühlt.

Eine Kühlung des Wasserstoff-Stroms 6 ist insbesondere durch seine Anwendung als Treibstoff in einer Wasserstoff-Tankstelle 26, ein Teil von der die Hochdruckelektrolyseanlage 2 ist, erforderlich. Hierfür wird der Wasserstoff-Strom 6 nach dem PEM-Hochdruckelektrolyseur 4 mittels eines Kompressors 28 auf einen Druck von mindestens 700 bar, insbesondere auf 800 bar komprimiert. Der komprimierte Wasserstoff wird dann in einem Druckbehälter 30 der Wasserstoff-Tankstelle 26 gelagert. Über eine Tanksäule 32 wird der Wasserstoff nach Bedarf zur Betankung eines Kraftfahrzeugs eingesetzt.

Beim Komprimieren des Wasserstoff-Stroms 6 vor dem Betankungsvorgangs erhitzt sich der Wasserstoff sehr stark. Um eine zu intensive Wärmeentwicklung zu verhindern, wird dabei der Kompressor 28 mittels des Kaltsauerstoff-Stroms 22 gekühlt. Wenn das Kühlpotential des Kaltsauerstoff-Stroms 22 nicht ausreichend ist, um den Wasserstoff-Strom 6 zu kühlen, sind ergänzend zum Kaltsauerstoff-Strom 22 auch weitere Kühlmittel einsetzbar. Hierbei gilt, dass je tiefer die Temperatur des Wasserstoff-Stroms 6 eingestellt wird, desto höher ist der Wirkungsgrad der Verdichtung. Bei einer Speicherung von besonders großen Mengen an komprimiertem Sauerstoff, was z.B. durch ein Anzapfen von externen Sauerstoff-Quellen 18 ermöglicht ist, kann bei einer Anordnung gemäß FIG 1 ausreichend kalter Sauerstoff zur Verfügung gestellt werden, um allein durch Sauerstoff, der durch ein oder mehrere Wirbelrohre entspannt und dadurch gekühlt wird, den Wasserstoff in der Tanksäule 32 vollständig zu kühlen.

In FIG 1 ist der Kompressor 28 als Bestandteil der Hochdruckelektrolyseanlage 2 dargestellt. Alternativ, insbesondere wenn die Wasserstofferzeugung nicht direkt am Betankungsort erfolgt, ist der Kompressor 28 aufgrund seiner räumlichen Nähe an der Tanksäule 32 Teil der Wasserstoff-Tankstelle 26.

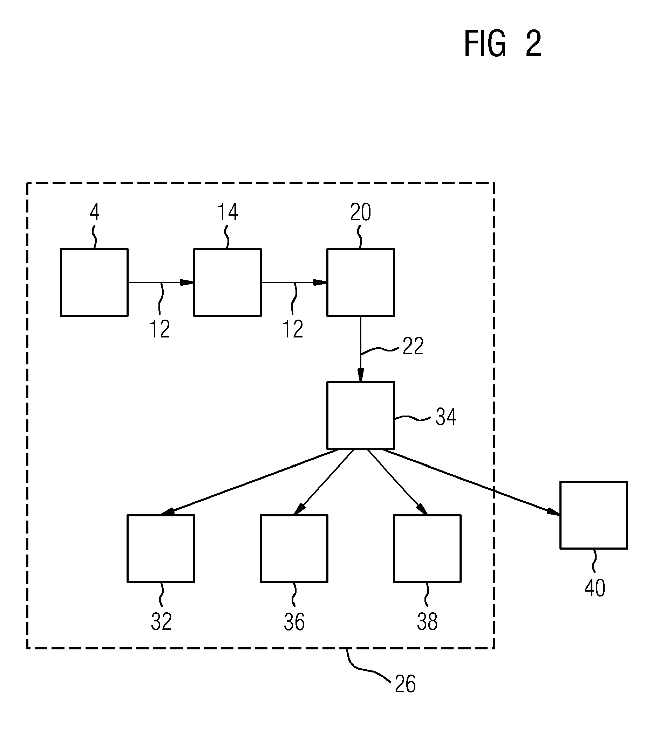

In FIG 2 sind weitere Anwendungsfälle für die Nutzung des Kaltsauerstoff-Stroms 22 gezeigt. Der Kaltsauerstoff-Strom 22 wird einem Kältenetz 34 zugeführt, von dem aus die Kälte in eine Infrastruktur der Wasserstoff-Tankstelle 26 verteilt wird. Das Kältepotential des Kaltsauerstoff-Stroms 22 wird hierbei nicht nur zur Kühlung eines Betankungsvorgangs an der Tanksäule 32 der Wasserstoff-Tankstelle 26 eingesetzt, sondern der Kalt-Sauerstoff wird außerdem benutzt, um beispielsweise Gebäude, wie z.B. das Gebäude der Tankstelle 26, zu kühlen, was durch den Block 36 angedeutet ist, oder Lebensmittel in einer Gefriereinrichtung 38 innerhalb des Tankstellengebäudes zu kühlen, dargestellt in FIG 2 durch den Block 38. Im Ausführungsbeispiel gemäß FIG 2 wird zudem Kaltsauerstoff abgezweigt, um einen externen Kälteabnehmer 40, der kein Teil der Infrastruktur der Wasserstoff-Tankstelle 26 ist, jedoch sich räumlich insbesondere in der Nähe der Wasserstoff-Tankstelle 26 befindet, mit Kälte zu versorgen.

## Patentansprüche

1. Verfahren zum Betreiben einer Hochdruckelektrolyseanlage (2), wobei
- in einem Hochdruckelektrolyseur (4), insbesondere einem PEM-Hochdruckelektrolyseur, ein Wasserstoff-Strom (6) und ein Sauerstoff-Strom (8) hergestellt werden, die unter hohem Druck aus dem Hochdruckelektrolyseur (4) hinausgeleitet werden,
- der Sauerstoff-Strom (8) zum Entspannen in ein Wirbelrohr (20) eingeleitet wird, in welchem die Druckenergie des Sauerstoffs in Kälte umgewandelt wird, wobei ein Kaltsauerstoff-Strom (22) erzeugt wird,
- der Kaltsauerstoff-Strom (22) zum Kühlen des Wasserstoff-Stroms (6) verwendet wird.

2. Verfahren nach Anspruch 1,
wobei der Sauerstoff-Strom (8) vor dem Entspannen in einem Druckspeicher (14) zwischengespeichert wird.

3. Verfahren Anspruch 2,
wobei dem Druckspeicher (14) aus einer externen Quelle (18) ein zusätzliches Gas unter hohem Druck, insbesondere Sauerstoff, zugeführt wird.

4. Verfahren nach einem der vorhergehenden Ansprüche,
wobei der Sauerstoff-Strom (8) im Wirbelrohr unterhalb 0°C, insbesondere unterhalb -20°C, insbesondere auf ca. -40°C abgekühlt wird.

5. Verfahren nach einem der vorhergehenden Ansprüche,
wobei der Wasserstoff-Strom (6) beim Komprimieren auf einen Druck von mindestens ca. 700 bar, insbesondere auf einen Druck von ca. 800 bar, mittels des Kaltsauerstoff-Stroms (22) gekühlt wird.

6. Verfahren nach einem der vorhergehenden Ansprüche,
wobei der Wasserstoff zum Betanken von Kraftfahrzeugen vorgesehen ist und die Kühlung mit dem Kaltsauerstoff-Strom (22) vor einem Betankungsvorgang erfolgt.

7. Hochdruckelektrolyseanlage (2) umfassend einen Hochdruckelektrolyseur (4), insbesondere einen PEM-Hochdruckelektrolyseur, zur Herstellung eines Wasserstoff-Stroms (6) und eines Sauerstoff-Stroms (8), wobei aus dem Hochdruckelektrolyseur (4) eine Wasserstoff-Leitung (10) bzw. eine Sauerstoff-Leitung (12) hinausführen, umfassend weiterhin ein in der Sauerstoff-Leitung (12) integriertes Wirbelrohr (20) zum Entspannen des Sauerstoff-Stroms (8), wobei aus dem Wirbelrohr (20) eine Kaltsauerstoff-Leitung (25) für einen Kaltsauerstoff-Strom (22) vorgesehen ist, die mit der WasserstoffLeitung (10) strömungstechnisch verbunden ist.

8. Hochdruckelektrolyseanlage (2) nach Anspruch 7,
wobei in der Sauerstoff-Leitung (12) vor dem Wirbelrohr (20) ein Druckspeicher (14) angeordnet ist.

9. Hochdruckelektrolyseanlage (2) nach Anspruch 8,
wobei der Druckspeicher (14) mit einer externen Quelle (18) zur Zufuhr von einem Gas unter hohem Druck, insbesondere von Sauerstoff, verbunden ist.

10. Hochdruckelektrolyseanlage (2) nach einem der Ansprüche 7 bis 9,
wobei in der Wasserstoff-Leitung (10) ein Kompressor (28) zum Komprimieren des Wasserstoffs auf einen Druck von mindestens ca. 700 bar, insbesondere auf einen Druck von ca. 800 bar, integriert ist und der Kompressor (28) mit der WasserstoffLeitung (10) strömungstechnisch verbunden ist.

11. Hochdruckelektrolyseanlage (2) nach Anspruch 10,
wobei dem Kompressor (28) in der Wasserstoff-Leitung (10) eine Tanksäule (32) nachgeschaltet ist.

12. Wasserstoff-Tankstelle (26) mit einer Hochdruckelektrolyseanlage (2) nach einem der Ansprüche 7 bis 11.

13. Wasserstoff-Tankstelle (26) nach Anspruch 12 mit einem Kältenetz (34) zur Versorgung von Einrichtungen der Tankstelle (26) mit Kälte, wobei die Kaltsauerstoff-Leitung (25) Teil des Kältenetzes (34) ist.

## Claims

1. Method for operating a high-pressure electrolysis installation (2), wherein
- a hydrogen stream (6) and an oxygen stream (8) are produced in a high-pressure electrolyser (4), especially a PEM high-pressure electrolyser, which are conveyed at high pressure out of the high-pressure electrolyser (4),
- the oxygen stream (8) is introduced into a vortex tube (20) for expansion, in which the pressure energy of the oxygen is converted into cold, wherein a cold oxygen stream (22) is created,
- the cold oxygen stream (22) is used for cooling the hydrogen stream (6).

2. Method according to claim 1,
wherein the oxygen stream (8) is stored before its expansion in a pressure vessel (14).

3. Method according to claim 2,
wherein an additional gas, especially oxygen, is supplied at high pressure to the pressure vessel (14) from an external source (18).

4. Method according to one of the preceding claims, wherein the hydrogen stream (8) is cooled down in the vortex tube below 0°C, especially below -20°C, especially to appr. -40°C.

5. Method according to one of the preceding claims, wherein the hydrogen stream (6), during compression to a pressure of at least appr. 700 bar, especially to a pressure of appr. 800 bar, is cooled by means of the cold oxygen stream (22).

6. Method according to one of the preceding claims, wherein the hydrogen is intended for fuelling vehicles and the cooling with the cold oxygen stream (22) is undertaken before a fuelling process.

7. High-pressure electrolysis installation (2) comprising a high-pressure electrolyser (4), especially a PEM high-pressure electrolyser, for producing a hydrogen stream (6) and an oxygen stream (8), wherein a hydrogen line (10) or an oxygen line (12) lead out of the high-pressure electrolyser (4), further comprising a vortex tube (20) integrated into the oxygen line (12) for expansion of the oxygen stream (8), wherein a cold oxygen line (25) for a cold oxygen stream (22) is provided from the vortex tube (20), which is connected to the hydrogen (10) line in terms of flow technology.

8. High-pressure electrolysis installation (2) according to claim 7,
wherein a pressure vessel (14) is disposed in the oxygen line (12) before the vortex tube (20).

9. High-pressure electrolysis installation (2) according to claim 8,
wherein the pressure vessel (14) is connected to an external source (18) for supply of a gas at high pressure, especially of oxygen.

10. High-pressure electrolysis installation (2) according to one of claims 7 to 9,
wherein a compressor (28) for compressing the hydrogen to a pressure of at least appr. 700 bar, especially to a pressure of appr. 800 bar, is integrated into the hydrogen line (10) and the compressor (28) is connected to the hydrogen line (10) in terms of flow technology.

11. High-pressure electrolysis installation (2) according to claim 10,
wherein a fuel pump (32) is connected downstream from the compressor (28) in the hydrogen line (10).

12. Hydrogen filling station (26) with a high-pressure electrolysis installation (2) according to one of claims 7 to 11.

13. Hydrogen filling station (26) according to claim 12, with a cooling network (34) for supplying devices of the filling station (26) with cold, wherein the cold oxygen line (25) is part of the cooling network (34).

## Revendications

1. Procédé pour faire fonctionner une installation ( 2 ) d'hydrolyse sous haute pression dans lequel,
- on produit dans un électrolyseur ( 4 ) sous haute pression, notamment dans un électrolyseur sous haute pression PEM, un courant ( 6 ) d'hydrogène et un courant ( 8 ) d'oxygène, qui sortent sous haute pression de l'électrolyseur ( 4 ) sous haute pression,
- on envoie le courant ( 8 ) d'oxygène pour le détendre dans un tube ( 20 ) à tourbillonnement, dans lequel l'énergie de pression de l'oxygène est transformée en froid, un courant ( 22 ) d'oxygène froid étant produit,
- on utilise le courant ( 22 ) d'oxygène froid pour refroidir le courant ( 6 ) d'hydrogène.

2. Procédé suivant la revendication ( 1 ),
dans lequel on emmagasine intermédiairement, dans un accumulateur ( 14 ) de pression, le courant ( 8 ) d'oxygène avant la détente.

3. Procédé suivant la revendication ( 1 ),
dans lequel on envoie un gaz supplémentaire sous haute pression, notamment de l'oxygène, d'une source ( 18 ) extérieure à l'accumulateur ( 14 ) de pression.

4. Procédé suivant l'une des revendications précédentes,
dans lequel on refroidit le courant ( 8 ) d'oxygène dans le tube à tourbillonnement en dessous de 0°C, notamment en dessous de - 20°C, notamment à environ - 40°C.

5. Procédé suivant l'une des revendications précédentes,
dans lequel on refroidit au moyen du courant ( 22 ) d'oxygène froid le courant ( 6 ) d'hydrogène en le comprimant jusqu'à une pression d'au moins environ 700 bar, notamment jusqu'à une pression d'environ 800 bar.

6. Procédé suivant l'une des revendications précédentes,
dans lequel l'hydrogène est prévue pour ravitailler des véhicules automobiles et le refroidissement par le courant ( 22 ) d'oxygène froid s'effectue avant un ravitaillement.

7. Installation ( 2 ) d'hydrolyse sous haute pression, comprenant un électrolyseur ( 4 ) sous haute pression, notamment un électrolyseur sous haute pression PEM, pour la production d'un courant ( 6 ) d'hydrogène et d'un courant ( 8 )d'oxygène, dans laquelle sortent de l'électrolyseur ( 4 ) sous haute pression un conduit ( 10 ) pour de l'hydrogène et respectivement un conduit ( 12 ) pour de l'oxygène, comprenant en outre un tube ( 20 ) de tourbillonnement intégré dans le conduit ( 12 ) pour l'oxygène en vue de détendre le courant ( 8 ) d'oxygène, dans laquelle part du tube ( 20 ) de tourbillonnement un conduit ( 25 ) pour de l'oxygène froid pour un courant ( 22 ) d'oxygène froid, qui communique fluidiquement avec le conduit ( 10 ) d'hydrogène.

8. Installation ( 2 ) d'électrolyse sous haute pression suivant la revendication 7,
dans laquelle un accumulateur ( 14 ) de pression est monté dans le conduit ( 12 ) pour l'oxygène avant le tube ( 20 ) de tourbillonnement.

9. Installation ( 2 ) d'électrolyse sous haute pression suivant la revendication 8,
dans laquelle l'accumulateur ( 14 ) de pression communique avec une source ( 18 ) extérieure d'apport d'un gaz sous haute pression, notamment d'oxygène.

10. Installation ( 2 ) d'électrolyse sous haute pression suivant l'une des revendications 7 à 9,
dans laquelle il est intégré au conduit ( 10 ) pour l'hydrogène un compresseur ( 28 ) de compression de l'hydrogène jusqu'à une pression d'au moins environ 700 bar, notamment jusqu'à une pression d'environ 800 bar et le compresseur ( 28 ) communique fluidiquement avec le conduit ( 10 ) pour l'hydrogène.

11. Installation ( 2 ) d'électrolyse sous haute pression suivant la revendication 10,
dans laquelle un ravitaillement ( 32 ) est monté en aval du compresseur ( 28 ) dans le conduit ( 10 ) pour l'hydrogène.

12. Ravitailleur ( 26 ) en hydrogène ayant une installation ( 2 ) d'hydrolyse sous haute pression suivant l'une des revendications 7 à 11.

13. Ravitailleur ( 26 ) en hydrogène suivant la revendication 12, ayant un réseau ( 34 ) de froid pour l'alimentation de dispositif du ravitailleur ( 26 ) en froid, le conduit ( 25 ) pour de l'oxygène froid faisant partie du réseau ( 34 ) de froid.
